# EUROPÄISCHE PATENTSCHRIFT

(11) **EP 0 309 975 B1**
(45) Veröffentlichungstag und Bekanntmachung des Hinweises auf die Patenterteilung: **28.04.1993**
(21) Anmeldenummer: 88115852.1
(22) Anmeldetag: 27.09.1988
(51) Int. Cl.: H04N 9/64, H04N 5/45

(54) **Horizontalfilter für ein Luminanz- und ein Chrominanzsignal**
Horizontal filter for a luminance signal and a chrominance signal
Filtre horizontal pour un signal de luminance et un signal de chrominance

(30) Priorität: 30.09.1987 DE 3733457
(43) Veröffentlichungstag der Anmeldung: 05.04.1989
(73) Patentinhaber: Deutsche Thomson-Brandt GmbH, 78003 Villingen-Schwenningen (DE)
(72) Erfinder: Guillon, Jean Claude, F-67150 Erstein (FR); Perdrieau, Laurent, F-67040 Illkirch (FR)

(56) Entgegenhaltungen:
- DE-A- 3 602 531
- US-A- 4 656 515
- US-A- 4 712 130
- IEEE TRANSACTIONS ON CONSUMER ELECTRONICS, Band 34, Nr. 1, Februar 1988, New York DAVID GILLIES et al. "V.L.S. I. Realisations for picture in picture and flicker free television display" Seiten 253-260

## Beschreibung

Die Anmeldung betrifft ein Horizontalfilter für ein Luminanz- und ein Chrominanzsignal zur Erzeugung eines reduzierten Bildes.

Es ist bekannt, eine horizontale Filterung durch analoge Filter mit einer entsprechenden Abtastfrequenz durchzuführen. Durch diese Filterung wird ein korrektes Reduktionsverhältnis erzeugt. Anschließend werden mittels eines Multiplexers und eines Analog/Digital-Konverters die Videokomponenten in einen digitalen Datenstrom umgesetzt. Dazu ist ein sehr schneller Multiplexer mit einer hohen Abtastrate erforderlich.

Der Erfindung liegt die Aufgabe zugrunde, die Speicherkapazität bezüglich eines vollständigen Videobildes zu reduzieren.

Diese Aufgabe wird durch die im Patentanspruch 1 angegebenen Maßnahmen gelöst. Vorteilhafte Weiterbildungen der Erfindung sind in den Unteransprüchen beschrieben.

Um ein Videosignal einer ersten Empfangsfrequenz, nachfolgend Hauptbild genannt, gleichzeitig mit einem Videosignal einer zweiten Empfangsfrequenz auf einem Bildwiedergabegerät darzustellen, wird vorgeschlagen, das Videosignal der zweiten Empfangsfrequenz, nachfolgend reduziertes Bild genannt, in seinen zweidimensionalen Abmessungen zu reduzieren.

Dazu wird für jedes Videobild, bestehend aus Hauptbild und reduzierten Bild, nur zwei Halbbild- oder ein Vollbildspeicher benötigt. Um die Größe des Videosignals der zweiten Empfangsfrequenz zu reduzieren und es als verkleinertes Bild in einem Hauptbild darzustellen, wird dieses unterabgetastet.

Mit der Unterabtastung wird eine vertikale und eine horizontale Reduktion durchgeführt. Anschließend werden die Signalwerte gespeichert. Durch die vor der Speicherung durchgeführte Reduktion wird Speicherplatz gespart. Erfindungsgemäß wird eine horizontale Reduktion des reduzierten Bildes wie folgt durchgeführt. Der Speicher wird sowohl für die Luminanzsignalanteile als auch für die Chrominanzsignalanteile verwendet. Da das menschliche Auge für Luminanzsignalanteile empfindlicher ist als für Chrominanzsignalanteile, wird vorgeschlagen, ein Abtastfrequenzverhältnis für Luminanz zu Chrominanz von z.B. 3:1 zu wählen. Beispielsweise könnte die Luminanz mit 10,125 MHz und die Chrominanz mit 3,375 MHz abgetastet werden. In diesem Fall beträgt die Taktfrequenz 13,5 MHz des kombinierten Bildsignals, bestehend aus Luminanz und Chrominanz.

Zur Verarbeitung der Bildsignale wird vorgeschlagen, nur einen Verarbeitungsweg vorzusehen. Dazu ist es erforderlich, die Abtastfrequenzen für die Luminanz und die Chrominanz umzuschalten. Die Umschaltung geschieht dadurch, daß sowohl Luminanz als auch Chrominanz in einer ersten Schaltung mit eine Taktfrequenz von z. B. 6,75 MHz abgetastet werden und in einem nachfolgenden Filter die Luminanz mit einer Abtastfrequenz von z. B. 2,53 MHz und die Chrominanz mit einer Abtastfrequenz von z. B. 0.84 MHz weiterverarbeitet werden. Erfingungsgemäß wird dazu die Luminanz während eines ersten Halbbildes und die Chrominanz während eines nachfolgenden zweiten Halbbildes abgetastet.

Nachstehend wird ein Ausführungsbeispiel an Hand der Zeichnung erläutert. Es zeigen:
- Fig. 1: erfindungsgemäße Multiplexer mit einem Analog/Digital-Konverter,
- Fig. 2: ein Zeitdiagramm der Multiplexersignale,
- Fig. 3: ein Digitalfilter für ein getrenntes Luminanzund Chrominanzsignal,
- Fig. 4: ein Digitalfilter für die Luminanz,
- Fig. 5: ein Zeitdiagramm dieses Digitalfilters,
- Fig. 6: ein Digitalfilter für die Chrominanz und
- Fig. 7: ein Zeitdiagramm fur diese Digitalfilter.

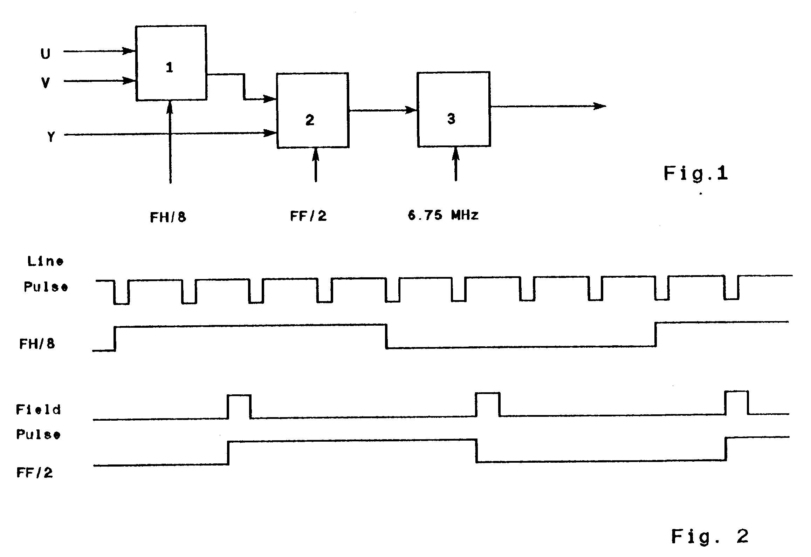

Fig. 1 zeigt die erfindungsgemäße Multiplexeranordnung mit einem Analog/Digital-Konverter 3. Die Chromiananzanteile U und V des Eingangssignals der zweiten Empfangsfrequenz werden auf je einen Eingang eines Multiplexers 1 gegeben, der mit Frequenz FH/8, die einem achtel der Zeilenfrequenz entspricht, die Eingänge umschaltet. Der Ausgang des Multiplexers 1 ist mit einem Eingang eines Multiplexers 2 verbunden, auf dessen zweiten Eingang das Luminanzsignal Y der zweiten Empfangsfrequenz geführt ist. Dieser Multiplexer 2 wird mit FF/2 umgeschaltet, wobei FF/2 die Halbbildfrequenz ist. Der Ausgang des Multiplexers 2 ist mit einem Eingang des Analog/Digital-Konverters 3 mit einer Abtastrate von 6,75 MHz verbunden.

Fig. 2 zeigt das dazugehörige Diagramm der Multiplexersignale.

Diese Eingangsschaltung gemäß Fig. 1erzeugt einen Datenfluß der wie folgt aussieht:

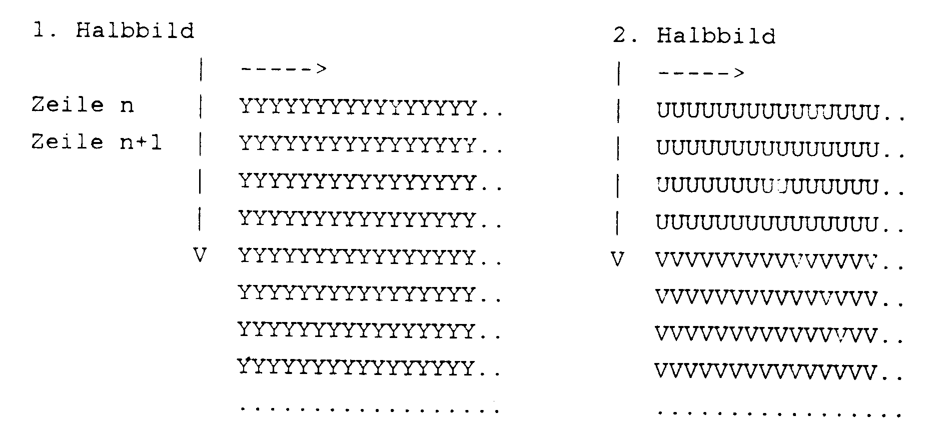

Im ersten Halbbild werden nur die Luminanzanteile Y und im zweiten Halbbild abwechselnd alle vier Zeilen die Chrominanzanteile U,V dem Analog/Digital-Konverter 3 zugeführt. Um z.B. für das reduzierte Bild eine Bitrate von 3,375 Ms/s zu erreichen, wird bei einem Wiedergabeverhältnis zwischen Luminanz Y und Chrominanz C von 3:1 für die Luminanz Y durchschnittlich eine Bitrate von 2.53 Ms/s und für die Chrominanz C eine Bitrate von 0.84 Ms/s eingestellt. Die Reduktion wird in einem Horizontalfilter durchgeführt. Die Signale Y und C werden wie folgt in einem Halbbild- oder Vollbildspeicher gespeichert:

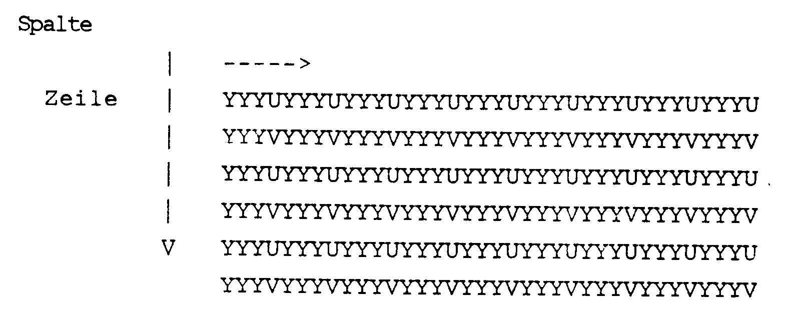

Aus dem ankommenden Datenstrom werden pro Halbbild nur jeweils eine der Komponenten Y oder C erneuert:

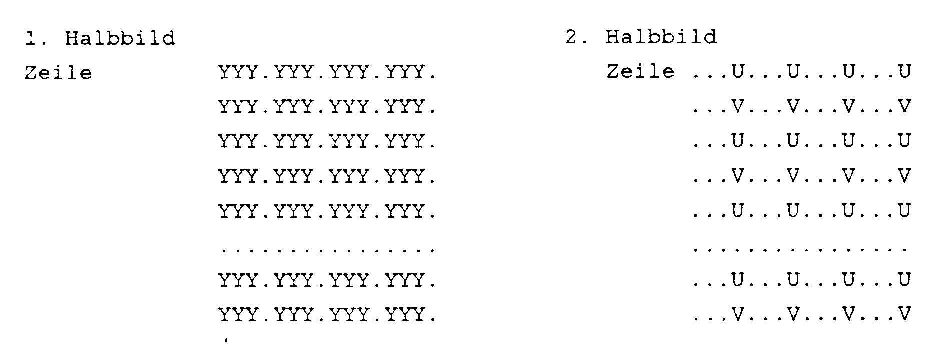

Die Schreibfrequenz des Speichers beträgt 3.375 MHz, jedoch werden einige Abtastwerte der Luminanz und der Chrominanz eines Halbbildes in Abhängigkeit der Komponenten C,Y, der aktuellen Halbbilder sowie der Speicherorganisation unterdrückt.

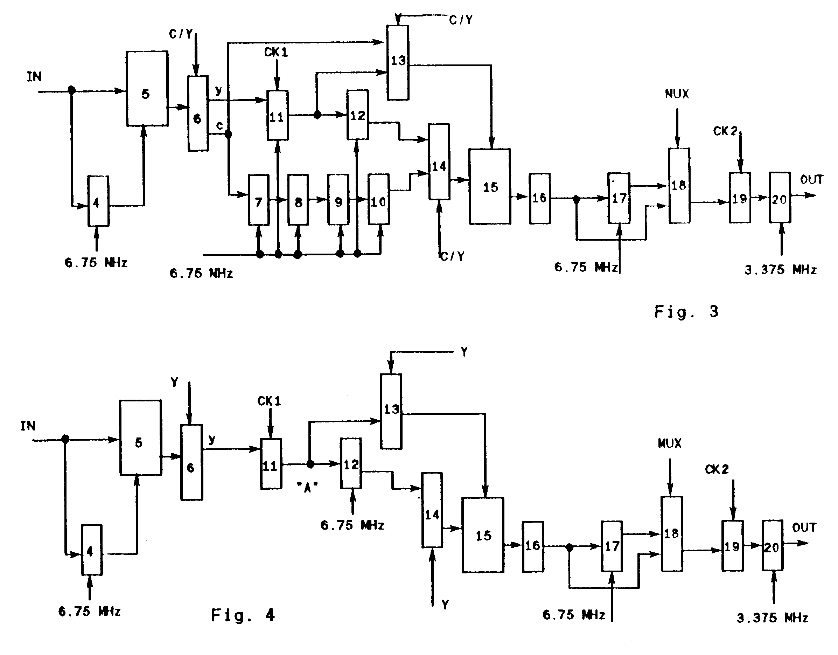

Um die Reduktion durchzuführen, wird erfindungsgemäß ein Digitalfilter gemäß Fig. 3 verwendet. Am Eingang IN des digitalen Filters liegt das Ausgangssignal der Eingangsschaltung (Fig. 1) an. Es wird einerseits dem Eingang eines D-Flip-Flops 4 und andererseits eines 8x8 Bit-Addierers 5 zugeführt. Das D-Flip-Flop 4 wird mit einer Taktfrequenz von 6.75 MHz getaktet. Die Ausgänge des 8x8 Bit-Addierers 5 führen auf 1:2 Multiplexer 6, dessen einer Ausgang auf eine D-Flip-Flop Kette 7 bis 10 führt, die ebenfalls mit 6,75 MHz getaktet ist. Der andere Ausgang des 1:2 Multiplexers 6 führt auf ein D-Flip-Flop 11, welches mit der Taktfrequenz CK1 getaktet ist. Sowohl der Ausgang des D-Flip-Flops 11 als auch der erste Ausgang des 1:2 Multiplexers 6 führen auf Eingänge eines 2:1 Multiplexers 13, welcher mit C, Y umgeschaltet wird, wobei C, Y der Halbbildfrequenz FF/2 entspricht. Ein Ausgang der D-Flip-Flop Kette 7 bis 10 und ein Ausgang des D-Flip-Flops 12 führen auf einen 2:1 Multiplexer 14, der ebenfalls mit C, Y umgeschaltet wird. Beide Ausgänge der 2:1 Multiplexer 13, 14 führen auf einen 8x8 Bit-Addierer 15, dessen Ausgang auf einen Dividierer 16 führen. Der Ausgang des Dividierer 15 führt einerseits über ein mit 6,75 MHz getaktetes D-Flip-Flop 17 als auch direkt auf einen Eingang eines 2:1 Multiplexer 18. Der Ausgang des 2:1 Multiplexers 18 führt über ein D-Flip-Flop 19, das mit CK2 getaktet wird, und einem D-Flip-Flop 20, welches mit 3.375 MHz getaktet ist, auf den Ausgang OUT des digitalen Filters.

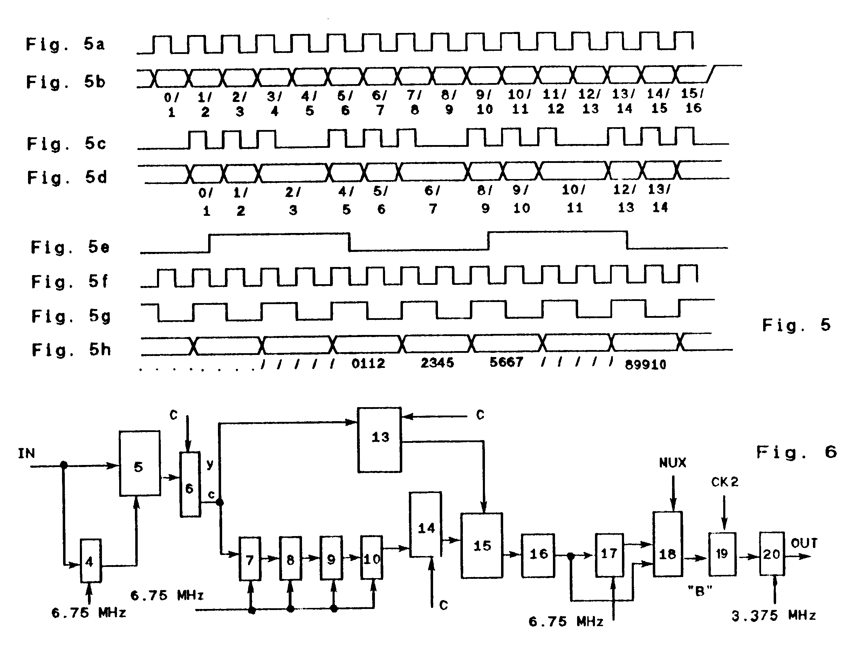

Die digitale Filterung der Luminanz erfolgt wie folgt: Für je ein Halbbild des Vollbildes des einkommenden Videosignales bearbeitet das Filter des Luminanzsignals Y, um eine Reduktion für das zu reduzierende Bild zu erhalten. Das Filter ist durch geeignete Taktraten so konstruiert, daß einige Teile für die Luminanzfilterung nicht verwendet werden. Die verwendeten Bauteile sind in Fig. 4 als Filter für die Luminanz dargestellt. Wie dem Bild 4 zu entnehmen ist, werden durch die Taktrate Y, entsprechend FF/2 für das Luminanzsignal, die D-Flip-Flops 7 bis 10 für die Luminanzbearbeitung durch Aktivierung des Eingangs des Multiplexers 14, welcher mit dem Ausgang des D-Flip-Flops 12 verbunden ist, nicht verwendet. Die Multiplexer 6, 13 und 14 werden durch das Luminanzsignal Y entsprechend FF/2 getaktet.

Im folgenden Schema ist die Arbeitsweise der Filterschaltung nach Fig. 4 widergegeben. Der Eingangsdatenfluß, der von der Eingangsmultiplexerschaltung (Fig. 1) kommt, hat eine Datenrate von 6.75 Ms/s.

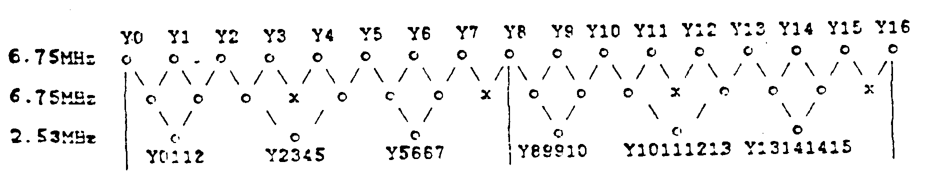

Dieses Schema stellt die Filtervorschrift dar, bei dem aus den drei Luminanzwerten Y⁰, 2*Y¹, Y² durch Mittelwertbildung ein Luminanzwert Y⁰¹¹² erzeugt wird

Y⁰¹¹²=(Y⁰+2*Y¹+Y²)/4

.

Gleiches gilt für die folgenden vier Luminanzwerte Y^{2,3,4,5} und so weiter.

Fig. 5 zeigt ein Zeitdiagramm dieses digitalen Filters für die Luminanzbildanteile Y. Fig. 5a gibt den 6.75 MHz Takt wieder. Fig. 5b zeigt die Daten, die am Ausgang des Kammfilters, bestehend aus D-Flip-Flop 4 und 8x8 Bit-Addierer 5 anliegen. Dort sind jeweils die Luminanzwerte Y⁰ und Y¹ zusammengefaßt zu einem Luminanzwert Y⁰¹. Entsprechendes gilt für die folgenden Luminanzwerte. In Fig. 5c ist das Taktsignal CK1 wiedergegeben, welches das D-Flip-Flop 11 steuert. Bei diesem Taktsignal CK1 wird nach je drei Luminanzwerten Y⁰¹, Y¹², Y²³ der vierte Luminanzwert Y³⁴ unterdrückt. Fig. 5d zeigt die Luminanzwerte Y⁰¹, Y¹², Y²³, Y⁴⁵ ... am Punkt A, wie sie am Ausgang des D-Flip-Flops 11 anliegen. Wie dem Zeitdiagramm (Fig. 5d) zu entnehmen ist, werden die Luminanzwerte Y⁰¹ und Y¹² verzögert wiedergegeben, sowie der Luminanzwert Y²³ über die doppelte Zeitdauer wie die Luminanzwerte Y⁰¹, Y¹² gehalten wird. Fig. 5e zeigt das Taktsignal MUX mit einer Taktfrequenz von 6.75/8 MHz. Fig. 5f zeigt die Taktfrequenz CK2, die für die Luminanzfilterung gleich der 6,75 MHz Taktfrequenz aus Fig. 5a ist. In Fig. 5g wird die halbe Taktfrequenz von CK2 angegeben, welche somit 3.375 MHz beträgt. In Fig. 5h ist das Datenausgangssignal des Filters aufgezeigt. Wie der Fig. 5h zu entnehmen, liegen am Ausgang seriell die Luminanzwerte Y⁰¹¹², Y²³⁴⁵, Y⁵⁶⁶⁷ an, für die folgende Taktzeit von 3.375 MHz sind keine Luminanzwerte vorgesehen, da dieser Platz reserviert ist für die Chrominanzsignalanteile C.

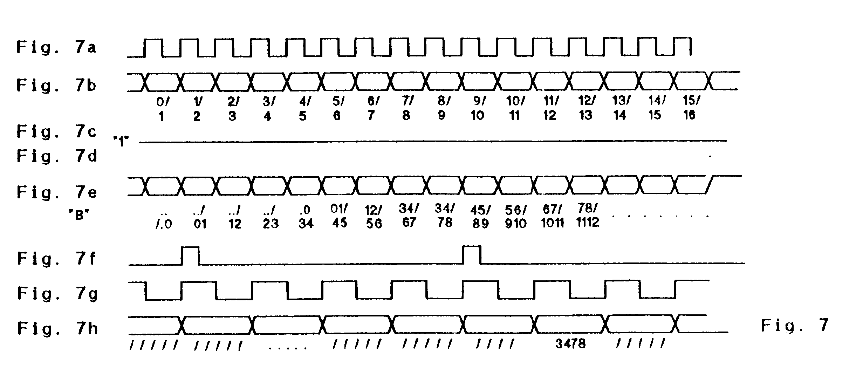

Für die Chrominanzfilterung in Fig. 3 ist die in Fig. 6 gezeichnete Aufbaustruktur wirksam. Für die Filterwirkung sind die D-Flip-Flops 11 und 12 nicht erforderlich. Für die Chrominanzfilterung ist das zweite Halbbild des ankommenden Videosignals reserviert. Nachfolgend ist schematisch dargestellt, wie die Chrominanzwerte C in der Filterstruktur behandelt wird. Der von der Eingangsschaltung gelieferte Datenstrom beträgt ebenfalls bei der Chrominanz 6.75 Ms/s. Es werden entsprechend der nachfolgenden Filtervorschrift die Chrominanzwerte C³, C⁴ und C⁷, C⁸ zusammengefaßt zu einem Chrominanzwert C³⁴⁷⁸. Die Chrominanzwerte C^{1, 2, 5, 6} werden dabei unterdrückt.

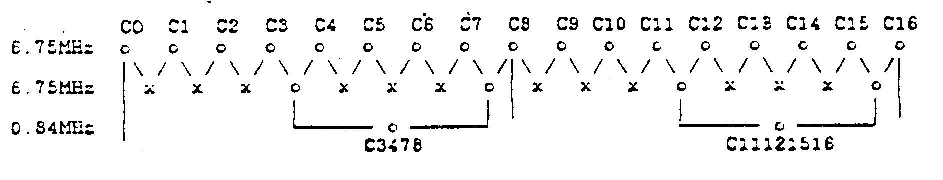

Im Zeitdiagramm des Filters für die Chrominanzsignalanteile (Fig. 7) werden die Taktraten CK1 und MUX nicht verwendet. Die Taktrate CK1 wird dabei auf logisch "1" gelegt. Für die Taktrate CK2, Fig. 7f steht nur jeder achte H-Impuls der Taktrate von Fig. 7a zu Verfügung.

Das Filter (Fig. 3) erzeugt direkt einen Datenstrom, der in den Bildspeicher eingeschrieben werden kann, mit der korrekten Bitrate und der korrekten Position der einzelnen Chrominanz- und Luminanzanteile ohne Zusatzsignale. Die Daten sind auch im richtigen Format angeordnet. Die Reduktionsrate des Filters beträgt 1:4 in der horizontalen Richtung. Die vertikale Reduktion kann z. B. durch einen vertikalen Interpolarfilter über z.B. vier Videozeilen erzeugt werden . Durch die erfindungsgemäße Filterschaltung werden nur wenige Filterelemente verwendet. Die Anzahl unterschiedlicher Takte ist gering. Die Zeitbasen, die für das Filter erforderlich sind, werden einerseits aus dem Horizontalsynchronimpuls jeder Zeile als auch durch einen 6,75 MHz Takt erzeugt. Alle anderen Signale werden intern erzeugt.

## Patentansprüche

1. Verfahren zur Verkleinerung von Bildern mittels Unterabtastung und Mittelwertbildung von Luminanz- (Y) und Chrominanz-Bildpunktwerten (U, V) in Zeilen dieser Bilder, **dadurch gekennzeichnet,** daß aus jeweils acht aufeinanderfolgenden Luminanz-Bildpunktwerten (Y0-Y7) mittels dreier Mittelwertbildungen (5, 15, 16) drei Luminanz-Bildpunktwerte (Y0112, Y2345, Y5667) für ein verkleinertes Bild berechnet werden und daß aus jeweils vier (C3, C4, C7, C8) von acht aufeinanderfolgenden Chrominanz-Bildpunktwerten (C1-C8) einer Chrominanzkomponente (U; V) mittels einer Mittelwertbildung (5, 15, 16) ein entsprechender Chrominanz-Bildpunktwert (C3478) für das verkleinerte Bild berechnet wird, wobei zeilenalternativ nur Bildpunktwerte einer der Chrominanzkomponenten verwendet werden.

2. Verfahren nach Anspruch 1, **dadurch gekennzeichnet,** daß vor den Mittelwertbildungen die Chrominanz-Bildpunktwerte mit einem achtel der Zeilenfrequenz (FH/8) und die Luminanz- und Chrominanzkomponenten mit Halbbild-Frequenz (FF/2) zu einem gemeinsamen Datenstrom gemultiplext werden.

3. Verfahren nach Anspruch 2, **dadurch gekennzeichnet,** daß die Luminanz- und Chroninanz-Bildpunktwerte für das verkleinerte Bild in Speichermitteln gespeichert werden, die Luminanz- und Chrominanz-Bildpunktwerte für ein nicht verkleinertes Bild enthalten.

## Claims

1. A method of reducing images by subsampling and mean value formation of luminance image element values (Y) and chrominance image element values (U, V) in lines of these images, characterised in that three luminance image element values (Y0112, Y2345, Y5667) for a reduced image are calculated from in each case eight consecutive luminance image element values (Y0-Y7) by means of three mean value formations (5, 15, 16), and that a corresponding chrominance image element value (C3478) for the reduced image is calculated from in each case four (C3, C4, C7, C8) of eight consecutive chrominance image element values (C1-C8) of a chrominance component (U; V) by means of one mean value formation (5, 15, 16), where only image element values of one of the chrominance components are used on alternate lines.

2. A method as claimed in Claim 1, characterised in that prior to the mean value formations, the chrominance image element values are multiplexed with one eighth of the line frequency (FH/8) and the luminance- and chrominance components are multiplexed with the field frequency (FF/2) to form a common data stream.

3. A method as claimed in Claim 2, charcterised in that the luminance- and chrominance image element values for the reduced image are stored in storage means which contain luminance- and chrominance image element values for an unreduced image.

## Revendications

1. Procédé pour la réduction d'images par sous-balayage et formation de la moyenne de valeurs de points d'image de chrominance (U, Y) et de luminance (Y) dans des lignes de ces images, **caractérisé en ce** que trois valeurs de points d'image de luminance (Y0112, Y2345, Y5667) sont calculées pour une image réduite à partir de respectivement huit points d'image de luminance successifs (Y0-Y7) au moyen de trois formations de moyenne (5, 15, 16) et qu'une valeur de point d'image de chrominance correspondante (C3478) est calculée pour l'image réduite à partir de respectivement quatre (C3, C4, C7, C8) de huit valeurs de points d'image de chrominance successives (C1-C8) d'une composante de chrominance (U ; V) au moyen d'une formation de moyenne (5, 15, 16), cependant qu'uniquement des valeurs de points d'image d'une des composantes de chrominance sont utilisées en alternance par ligne.

2. Procédé selon la revendication 1, **caractérisé en ce** qu'avant les formations de moyenne les valeurs de points d'image de chrominance avec un huitième de la fréquence ligne (FH/8) et les composantes de luminance et de chrominance avec la fréquence de trame (FF/2) sont multiplexées en un flux de données communes.

3. Procédé selon la revendication 2, **caractérisé en ce** que les valeurs de points d'image de luminance et de chrominance pour l'image réduite sont mémorisées dans des organes de mémorisation qui contiennent des valeurs de points d'image de luminance et de chrominance pour une image non réduite.
